# DEMANDE DE BREVET EUROPEEN

(11) **EP 1 403 789 A1**
(43) Date de publication de la demande: **31.03.2004**
(21) Numéro de dépôt: 03292311.2
(22) Date de dépôt: 19.09.2003
(51) Int. Cl.: G06F 17/30

(54) **Procédé de gestion de bases de données multimédia, système et dispositif pour la mise en oeuvre de ce procédé**

(30) Priorité: 24.09.2002 FR 0211792
(71) Demandeur: FRANCE TELECOM, 75015 Paris (FR)
(72) Inventeur: Gastinger, René, 35000 Rennes (FR); Nedellec, Erwan, 35700 Rennes (FR); Colomier, Cédric, 35320 Pance (FR); Peigne, Bernard, 35340 Liffre (FR); Jumpertz, Sylvie, 35000 Rennes (FR)
(74) Mandataire: Remy, Vincent Noel Paul

(57) **Abrégé**

L'invention concerne notamment un procédé de gestion d'au moins une base de données (28) stockant des contenus multimédia, cette base de données étant reliée par un réseau local (10) à au moins un lecteur audiovisuel (12, 14, 16, 18, 20, 22, 24, 26, 30) des contenus multimédia.

Ce procédé comporte les étapes suivantes :
- génération d'au moins un formulaire comportant des mots-clés et des paramètres de lecture des contenus multimédia de la base de données (28) sur le lecteur audiovisuel (12, 14, 16, 18, 20, 22, 24, 26, 30) ;
- sélection de contenus multimédia de la base de données (28) en fonction des mots-clés du formulaire ;
- lecture des contenus multimédia sélectionnés sur le lecteur audiovisuel (12, 14, 16, 18, 20, 22, 24, 26, 30), en fonction des paramètres de lecture du formulaire.

## Description

La présente invention concerne un procédé de gestion d'au moins une base de données stockant des contenus multimédia. Elle concerne également un système et un dispositif pour la mise en oeuvre de ce procédé.

Plus précisément, l'invention concerne un procédé de gestion s'appliquant à une base de données reliée par un réseau local à au moins un lecteur audiovisuel des contenus multimédia qu'elle contient.

Des procédés de gestion connus permettent de lire des contenus multimédia stockés dans la base de données en utilisant des fichiers thématiques regroupant plusieurs contenus multimédia de la base organisés séquentiellement. Dans ce cas, la recherche sur un thème donné comporte l'avantage d'être reproductible, car il suffit de la lancer à l'aide d'un fichier correspondant prédéfini. Mais elle ne s'applique pas à une base de données dont le contenu est amené à évoluer, par l'ajout, la modification, ou la suppression de contenus multimédia.

De plus, la lecture d'un contenu multimédia par tel ou tel lecteur audiovisuel du réseau local n'est pas gérée automatiquement et nécessite l'intervention de l'utilisateur.

L'invention a pour but de remédier à ces inconvénients en fournissant un procédé de gestion d'au moins une base de données capable d'effectuer des recherches reproductibles mais adaptées à une base de donnés étant amenée à évoluer, et capable de gérer automatiquement la lecture des contenus sélectionnés sur les lecteurs audiovisuels reliés à cette base de données.

A cet effet, l'invention a pour objet un procédé de gestion d'au moins une base de données stockant des contenus multimédia, cette base de données étant reliée par un réseau local à au moins un lecteur audiovisuel des contenus multimédia, caractérisé en ce qu'il comporte les étapes suivantes :
- génération d'au moins un formulaire comportant des mots-clés et des paramètres de lecture des contenus multimédia de la base de données sur le lecteur audiovisuel ;
- sélection de contenus multimédia de la base de données en fonction des mots-clés du formulaire ;
- lecture des contenus multimédia sélectionnés sur le lecteur audiovisuel, en fonction des paramètres de lecture du formulaire.

Ainsi, le formulaire permet de définir un thème de recherche prédéterminé, en garantissant la reproductibilité d'une recherche même si la base de données évolue dans le temps. De plus, les contenus multimédia sélectionnés sont répartis sur les lecteurs audiovisuels disponibles, en fonction des paramètres prédéfinis dans le formulaire.

Un procédé de gestion d'au moins une base de données selon l'invention peut en outre comporter l'une ou plusieurs des caractéristiques suivantes :
- Il comporte en outre les étapes suivantes :
   - génération d'une requête comportant les mots-clés du formulaire,
   - fourniture d'une liste de contenus multimédia au moins en partie constituée de contenus de la base de données en réponse à la requête,
   - lecture des contenus multimédia retournés en réponse à la requête, sur le lecteur audiovisuel, en fonction des paramètres de lecture du formulaire ;
- Il est adapté pour la génération d'une ambiance multimédia par la lecture d'une partie des contenus multimédia de la base de données sur le lecteur audiovisuel, et il comporte une étape d'extraction du formulaire parmi un ensemble de formulaires prédéfinis, chaque formulaire comprenant des mots-clés et des paramètres de lecture des contenus multimédia de la base de données sur le lecteur audiovisuel ;
- Il est adapté pour la génération et la lecture audiovisuelle d'un carnet de voyage constitué de contenus multimédia dont au moins une partie est stockée dans la base de données, et il comporte les étapes suivantes :
   - extraction du formulaire comprenant des mots-clés et des paramètres de lecture des contenus multimédia de la base de données sur le lecteur audiovisuel ;
   - génération d'une requête comportant les mots-clés du formulaire ;
   - fourniture d'une liste de contenus multimédia au moins en partie constitués de contenus de la base de données en réponse à la requête;
- Il comporte en outre une étape d'insertion des contenus multimédia fournis dans le carnet de voyage, en les ordonnant selon les noms de lieux auxquels ils se rapportent et en respectant l'ordre chronologique de réalisation de ces contenus ;
- Il est adapté pour l'indexation des contenus multimédia stockés dans la base de données, chaque contenu multimédia étant associé à un ensemble de descripteurs à compléter, et il comporte les étapes suivantes :
   - sélection d'au moins un programme d'indexation dans une liste de programmes d'indexation et de contenus multimédia dans la base de données, par l'émission d'une requête générée à partir du formulaire, chaque programme d'indexation de la liste exploitant au moins une partie des contenus de la base de données en vue de leur indexation et étant associé à un ensemble de descripteurs qu'il est capable de compléter lorsqu'il est activé,
   - activation du programme d'indexation sélectionné,
   - lecture des contenus multimédia sélectionnés sur le lecteur audiovisuel pendant l'exécution du programme d'indexation, en fonction des paramètres de lecture du formulaire ;
- lors de l'étape de sélection :
   - on définit directement chaque programme d'indexation sélectionné par les mots-clés du formulaire,
   - on génère la requête en introduisant dans celle-ci les descripteurs associés à chaque programme d'indexation sélectionné,
   - on sélectionne, en réponse à la requête, les contenus multimédia dont les descripteurs à compléter correspondent le mieux aux descripteurs associés à chaque programme d'indexation sélectionné ;
- lors de l'étape de sélection :
   - on définit directement les contenus multimédia sélectionnés par les mots-clés du formulaire,
   - on génère la requête en introduisant dans celle-ci les descripteurs à compléter associés aux contenus sélectionnés,
   - on sélectionne, en réponse à la requête, au moins un programme d'indexation associé à des descripteurs correspondant le mieux aux descripteurs à compléter des contenus multimédia sélectionnés ;
- le programme d'indexation est un jeu multimédia ; et
- la base de données est reliée à plusieurs lecteurs audiovisuels, et les paramètres de lecture du formulaire définissent pour chacun de ces lecteurs audiovisuels, le type de contenus qu'il est apte à lire.

L'invention a également pour objet un système de gestion d'au moins une base de données stockant des contenus multimédia, le système comportant un réseau local auquel sont reliés la base de données et au moins un lecteur audiovisuel des contenus multimédia, caractérisé en ce qu'il comporte en outre :
- des moyens de génération d'au moins un formulaire comportant des mots clés et des paramètres de lecture des contenus multimédia de la base de données sur le lecteur audiovisuel ;
- des moyens de sélection de contenus multimédia de la base de données en fonction des mots clés du formulaire ;
- des moyens d'affectation des contenus multimédia sélectionnés sur le lecteur audiovisuel, en fonction des paramètres de lecture du formulaire.

Enfin, l'invention a également pour objet un dispositif de gestion d'au moins une base de données stockant des contenus multimédia, cette base de données étant reliée par un réseau local à au moins un lecteur audiovisuel, caractérisé en ce qu'il comporte :
- des moyens de génération d'au moins un formulaire comportant des mots clés et des paramètres de lecture des contenus multimédia de la base de données sur le lecteur audiovisuel ;
- des moyens de sélection de contenus multimédia de la base de données en fonction des mots clés du formulaire ;
- des moyens d'affectation des contenus multimédia sélectionnés sur le lecteur audiovisuel, en fonction des paramètres de lecture du formulaire.

De façon optionnelle, le dispositif de gestion d'au moins une base de données selon l'invention comporte un ordinateur.

L'invention sera mieux comprise à la lecture de la description qui va suivre, donnée uniquement à titre d'exemple et faite en se référant aux dessins annexés dans lesquels :
- la figure 1 représente schématiquement la structure générale d'un système de gestion selon l'invention ;
- la figure 2 représente une page d'accueil d'un système selon l'invention ;
- la figure 3 représente schématiquement la structure logicielle d'un système selon l'invention pour la génération d'une ambiance multimédia ;
- la figure 4 représente les étapes successives d'un procédé mis en oeuvre par le système de la figure 3 ;
- la figure 5 représente schématiquement la structure logicielle d'un système selon l'invention pour la génération et la lecture audiovisuelle d'un carnet de voyages ;
- les figures 6 et 7 représentent les étapes successives de procédés mis en oeuvre par le système de la figure 5 ;
- la figure 8 représente schématiquement la structure logicielle d'un système selon l'invention pour l'indexation de contenus multimédia ;
- la figure 9 représente les étapes successives d'un procédé mis en oeuvre par le système de la figure 8.

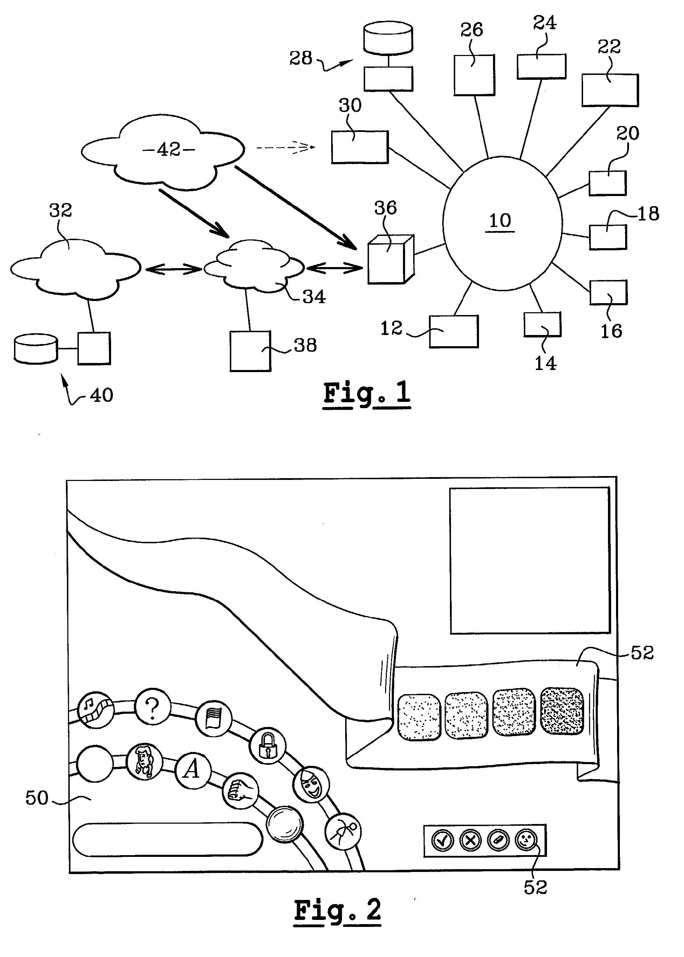

Le système représenté sur la figure 1 comporte un réseau local 10 auquel sont connectés plusieurs dispositifs.

Le réseau local 10 peut utiliser l'une quelconque des technologies classiques pour l'échange d'informations.

Parmi celles-ci, on connaît les technologies Ethernet, radio, IEEE 1394.

Les dispositifs connectés au réseau local 10 comportent par exemple un diffuseur d'odeurs 12, un assistant numérique personnel 14, un support de photos numériques 16, un micro-ordinateur 18, une chaîne Hi-Fi 20, un premier téléviseur 22, un dispositif d'éclairage 24, un écran multimédia mural 26, une base de données 28 et un second téléviseur 30. La base de données 28 est par exemple matérialisée par un disque dur piloté par un serveur.

Le réseau local 10 est relié à un réseau de transmission d'informations 32 tel que le réseau Internet, par l'intermédiaire d'une liaison à haut débit 34 telle qu'une liaison ADSL. La jonction entre le réseau local 10 et la liaison ADSL 34 est assurée par une passerelle de service 36 gérée par un opérateur de passerelle 38 relié à la liaison ADSL 34

Enfin, un fournisseur de services 40 est relié au réseau Internet 32.

Un diffuseur 42 de programmes de télévision numérique terrestre , par satellite ou par câble, transmet des données, soit directement aux téléviseurs 22 et 30, soit indirectement au moyen de la liaison ADSL 34 ou à la passerelle de service 36.

La base de données multimédia 28 stocke des contenus numériques. D'une façon plus générale, les contenus numériques peuvent être stockés sur une ou plusieurs bases de données, notamment en fonction de leur volume.

Ces contenus numériques comprennent des données personnelles enregistrées directement par l'utilisateur dans la base de données 28, des contenus numériques enregistrés à partir de programmes diffusés par le diffuseur de programmes 42, ou bien des contenus numériques téléchargés à partir du site Internet du fournisseur de services 40.

Chaque contenu est associé à un ensemble de descripteurs. Ces descripteurs sont également stockés dans la base de données 28, mais pourraient être stockés dans une autre base de données reliée au réseau local 10 ou au réseau Internet 32.

On peut imaginer toutes sortes de descripteurs pour décrire les contenus numériques de la base de données 28. Nous allons ci-dessous présenter un certain nombre de descripteurs importants mais non limitatifs.

Un premier descripteur appelé "ORIGINE" décrit l'origine du contenu numérique correspondant. Ce descripteur est modifiable par l'utilisateur.

Un descripteur appelé "MIMETYPE" décrit la nature et le format d'un contenu numérique. Par exemple, ce descripteur précise que le contenu numérique correspondant est une image de type JPEG, ou bien que ce contenu est une vidéo de type QUICK TIME. Ce descripteur est également modifiable par l'utilisateur.

Un descripteur appelé "URL" décrit l'adresse URL où est stocké le contenu numérique correspondant. Ce descripteur est utile notamment dans le cas où les contenus numériques sont dispersés dans plusieurs bases de données, les descripteurs étant eux-même stockés à un autre endroit. Ce descripteur est modifiable par l'utilisateur.

Un descripteur appelé "TITRE" comporte un commentaire décrivant le contenu numérique correspondant. Ce descripteur est modifiable par l'utilisateur.

Un descripteur appelé "GROUPE" décrit un ensemble de personnes autorisées à accéder aux contenus numériques correspondant. Pour être utile, ce descripteur suppose la mise en oeuvre d'un procédé d'authentification d'un utilisateur, lorsque celui-ci souhaite accéder aux contenus stockés dans la base de données 28. Par défaut, ce descripteur peut désigner l'ensemble des utilisateurs ayant normalement accès au système.

Un descripteur appelé "TYPE" décrit le type du contenu numérique correspondant, ce type étant prédéterminé parmi un ensemble de types définis dans la base de données multimédia 28. Par exemple, ce type est choisi parmi les éléments suivants : chanson, clip vidéo, enregistrement, film, émission télévisée, article, livre, photo, vidéo. Ce descripteur est modifiable par l'utilisateur. De plus, la saisie du type par l'utilisateur est obligatoire.

Un descripteur appelé "THEME" décrit le thème du contenu numérique correspondant, ce thème étant choisi parmi un ensemble de thèmes prédéfinis dans la base de données multimédia.

Le choix d'un thème dépend du type du contenu. Par exemple, pour un contenu numérique du type "chanson", "clip vidéo" ou "enregistrement", l'utilisateur pourra choisir le thème du contenu parmi les éléments de l'ensemble suivant : pop rock, variété, monde, jazz, classique, ambiance, électronique, émission radio, interview, autres.

Pour un contenu numérique du type "film", l'utilisateur pourra choisir un thème parmi les suivants : aventure, comédie, érotique, document, horreur, fantastique, musical, policier, western, autres.

Pour un contenu numérique du type "émission télévisée", l'utilisateur pourra choisir l'un des thèmes suivants : jeunesse, info-magasine, cinéma, série, sport, divertissement, musique, arts, science, autres.

Pour un contenu numérique du type "article" ou "livre", l'utilisateur pourra choisir un thème parmi les suivants : arts, bande dessinée, jeunesse, littérature, loisirs, sport, policier, bien-être, voyages, autres.

Pour un contenu numérique du type "photo" ou "vidéos" l'utilisateur pourra choisir l'un des thèmes parmi les suivants : sport/loisirs, vacances, famille, nature, animaux, fête, paysages, gens, arts, autres.

Un descripteur appelé "LIEU" décrit un lieu auquel se rapporte le contenu correspondant. Ce descripteur est modifiable par l'utilisateur.

Un descripteur appelé "INTERPRETE" donne le nom d'une ou plusieurs personnes participant au contenu. Il peut s'agir d'acteurs, d'un présentateur ou d'autres types de participants. Ce descripteur est également modifiable par l'utilisateur.

Un descripteur appelé "CREATEUR" donne le nom de l'auteur ou du réalisateur du contenu numérique correspondant. Ce descripteur est modifiable par l'utilisateur.

Un descripteur appelé "LIEN" associe, au contenu numérique correspondant, un autre contenu numérique de la base de données 28 et spécifie le type d'association. Par exemple, un lien peut associer une image au contenu numérique correspondant, celle-ci étant alors notamment affichée lorsque le contenu numérique correspondant est sélectionné. Ce descripteur est modifiable par l'utilisateur.

Un descripteur appelé "MOT-CLE" comporte un ou plusieurs mots-clés associés au contenu numérique correspondant. Ce descripteur est modifiable par l'utilisateur.

Un descripteur appelé "DUREE" décrit la durée du contenu numérique correspondant. Ce descripteur est modifiable par l'utilisateur.

Plusieurs descripteurs appelés "DATE DE CREATION", "DATE DE MODIFICATION", "DATE DE REFERENCE", "DATE DE SUPPRESSION", décrivent respectivement la date à laquelle le contenu numérique correspondant a été enregistré, la date à laquelle il a été modifié pour la dernière fois, la date à laquelle il se rapporte, et la date à laquelle il a été supprimé. Parmi ces descripteurs, seule la date de référence est modifiable par l'utilisateur.

Un descripteur appelé "AMBIANCE" comporte un ou plusieurs mots-clés décrivant une ambiance caractéristique du contenu numérique correspondant, cette ambiance étant prédéfinie dans la base de données multimédia 28. Ce descripteur est modifiable par l'utilisateur.

Un descripteur appelé "RYTHME" comprend un ou plusieurs mots-clés décrivant un rythme pouvant être associé au contenu numérique correspondant. Ces mots-clés sont prédéfinis dans la base de données 28. Le descripteur correspondant est modifiable par l'utilisateur.

Enfin, un descripteur appelé "COULEUR" décrit une ou plusieurs couleurs pouvant être associées au contenu numérique correspondant. Ces couleurs sont prédéfinies dans la base de données multimédia 28. Le descripteur correspondant est modifiable par l'utilisateur.

La page d'accueil représentée sur la figure 2 est présentée à l'utilisateur sur un écran de visualisation. Par exemple, cet écran est celui de l'appareil de télévision 22 ou 30. Dans ce cas, l'utilisateur interagit avec l'interface graphique de cette page d'accueil à l'aide d'une télécommande.

L'interface graphique peut également être présentée à l'utilisateur sur l'écran d'un micro-ordinateur, tel que l'ordinateur 18. Dans ce cas, l'utilisateur interagit avec l'interface graphique à l'aide d'une souris et d'un clavier.

Cette interface est utilisée par le système pour l'indexation de la base de données 28 ou pour la recherche de contenus numériques.

Elle comprend une première zone 50 comportant un ensemble d'icones de sélection, chacun correspondant à un descripteur de recherche ou d'indexation.

Elle comprend une deuxième zone 52 comportant une barre d'action permettant de déclencher des actions générales prédéterminées à partir de l'écran affiché. De telles actions sont par exemple la validation d'un choix, l'annulation d'une commande, d'une correction, etc.

Dans une troisième zone 54 de l'interface graphique, une liste est affichée et comporte les valeurs possibles d'un descripteur, lorsque celui-ci est sélectionné dans la zone 50. Par exemple, si le descripteur "type" est sélectionné, la liste comporte l'ensemble des valeurs que ce descripteur peut prendre, c'est à dire chanson, clip vidéo, enregistrement, film, émission télévisée, article, photo, ou vidéo. Si le descripteur couleur est sélectionné, la liste comporte une palette de couleurs prédéfinies dans la base de données et sélectionnables par l'utilisateur.

Lorsque l'utilisateur sélectionne l'un ou l'autre des descripteurs de la première zone 50, la liste est modifiée en conséquence.

Lorsque l'utilisateur a validé puis émis une requête de documents de la base de données 28, le système retourne un ensemble de contenus sélectionnés dans celle-ci et l'interface graphique les affiche.

La présentation des contenus est dépendante de leur nature.

Ainsi, l'ensemble des contenus de type "son" trouvés forme une mosaïque. Chaque contenu est représenté par une image associée au fichier audio si elle est présente dans la base de données multimédia 28, sinon par une image générique. Le titre du contenu audio est affiché sous l'image. Enfin, dans une zone de l'interface graphique, un menu dédié permet d'effectuer des commandes spécifiques aux fichiers audio, tel que les commandes "play", "pause", "stop", etc.

L'ensemble des contenus de type "image" trouvés forme une mosaïque. Chaque contenu est représenté par l'image proprement dite sous laquelle se trouve le titre de l'image. De même, l'interface graphique présente un menu dédié aux fichiers de type image.

L'ensemble des contenus de type texte trouvé forme une mosaïque. Chaque contenu est représenté par une image associée au texte si elle est présente dans la base de données multimédia, sinon par une image générique. Sous l'image est affiché le titre du texte. Un menu dédié aux fichiers de type texte est affiché par l'interface graphique.

L'ensemble des contenus de type "vidéo" trouvés forme une mosaïque. Chaque contenu est représenté par une image associée au contenu vidéo si elle est présente dans la base de donnée multimédia, sinon par une image générique. Sous l'image est affiché le titre du contenu de type vidéo. Dans ce cas également, l'interface graphique affiche un menu dédié permettant d'effectuer des commandes spécifiques aux fichiers de type vidéo.

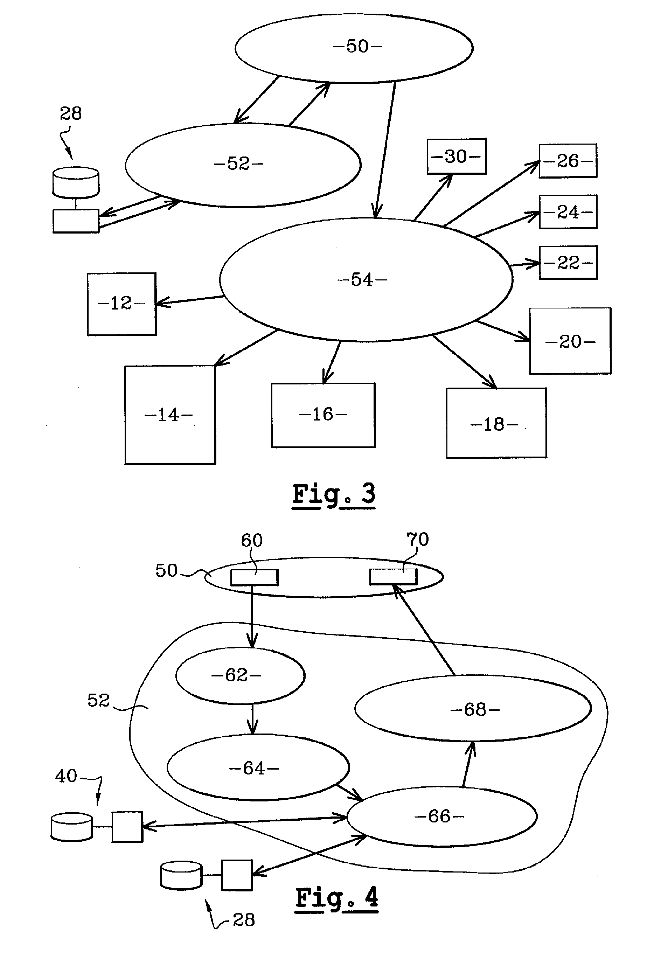

Le système de gestion de la base de données 28 décrit précédemment permet notamment la mise en oeuvre d'un procédé de gestion pour la génération d'une ambiance multimédia par la lecture d'une partie des contenus multimédia de la base 28 sur au moins une partie des lecteurs audiovisuels 12, 14, 16, 18, 20, 22, 24, 26 et 30 reliés au réseau local 10. Ce procédé est plus précisément mis en oeuvre par des moyens logiciels, par exemple stockés sur le micro-ordinateur 18 ou sur la passerelle 36 et dont la structure est représentée sur la figure 3.

Ces moyens logiciels comprennent un module de navigation 50. Ce module est adapté pour la présentation d'écrans de dialogue permettant la génération d'une ambiance multimédia et la gestion de formulaires d'ambiance multimédia comprenant des mots-clés et des paramètres de lecture des contenus multimédia de la base de données sur les lecteurs audiovisuels reliés au réseau local 10.

Les moyens logiciels comprennent aussi un module 52 d'extraction de contenus multimédia, adapté pour l'obtention d'une liste de contenus multimédia pertinents par rapport à une requête émise. Ce module d'extraction 52 interagit avec le module de navigation 50, mais également avec la base de données 28, pour l'extraction de contenus multimédia.

Enfin, les moyens logiciels comprennent un moteur 54 d'exécution d'ambiance qui exécute un fichier d'ambiance multimédia qui lui a été fourni en entrée par le module de navigation 50. Il est en outre adapté pour piloter les différents terminaux reliés au réseau local 10 en fonction des données enregistrées dans le fichier d'ambiance multimédia et en fonction des interactions avec l'utilisateur. Le moteur d'exécution d'ambiance 54 permet donc de piloter le diffuseur d'odeurs 12, l'assistant numérique personnel 14, le cadre photo 16, le micro-ordinateur 18, la chaîne Hi-Fi 20, l'une ou l'autre des télévisions 22 ou 30, le système d'éclairage 24 et l'écran mural 26.

Les moyens logiciels décrits précédemment permettent la mise en oeuvre du procédé de génération d'une ambiance multimédia représenté sur la figure 4.

Lors d'une première étape 60, le module de navigation 50 propose à l'utilisateur la génération d'au moins un formulaire comportant des mots-clés et des paramètres de lecture de contenus multimédia de la base de données 28 sur au moins une partie des lecteurs audiovisuels reliés au réseau local 10.

Lors de cette étape de génération, l'utilisateur peut choisir la nature des contenus à utiliser, c'est à dire des contenus de type audio, vidéo, image, texte ou odeur, et les terminaux à solliciter. Il peut générer des ambiances prédéfinies ou créer sa propre ambiance multimédia.

Ces ambiances multimédia peuvent exploiter des contenus de la base de données 28 ou des contenus proposés par un fournisseur de services, tel que le fournisseur 40.

Une ambiance multimédia est définie par un ensemble de descripteurs avec des valeurs prédéterminées. Les valeurs de ces descripteurs sont définies dans un formulaire correspondant qui est stocké dans la base de données 28.

Pour la génération du formulaire, l'utilisateur précise également des paramètres d'utilisation des terminaux sollicités par l'ambiance multimédia. Ces paramètres comprennent par exemple le niveau du son ou de l'éclairage, le choix d'un parfum pour le diffuseur d'odeurs 12, le temps d'affichage des images fixes, le temps de pause entre deux fichiers son et vidéo, une heure de début, une heure de fin ou une durée d'ambiance, etc.

A tout moment l'utilisateur peut créer une nouvelle ambiance, en détruire une ou bien en modifier une.

Le formulaire d'ambiance multimédia est réalisé par un fichier de type prédéterminé dont le contenu est constitué d'un entête et d'un corps. L'entête permet de mémoriser les paramètres généraux et additionnels de l'ambiance. Il se présente sous la forme d'une succession de couples (descripteur, valeur). Le corps permet de mémoriser les listes de contenus pertinents, résultats de la recherche dans la base de données multimédia.

Lors de l'étape 62 suivante, mise en oeuvre par le module d'extraction 52, celui-ci extrait les descripteurs et leurs valeurs du formulaire fourni par le module de navigation 50.

Lors de l'étape 64 suivante, le module d'extraction 52 génère une requête comportant des mots-clés qui correspondent aux descripteurs extraits et associés à leurs valeurs.

Ensuite, lors d'une étape 66, le module d'extraction 52 interagit avec la base de données 28 et éventuellement avec le serveur du fournisseur de services 40 pour récupérer des contenus multimédia pertinents en réponse à la requête.

Les contenus multimédia récupérés lors de cette étape, sont intégrés dans le formulaire multimédia, lors d'une étape 68. Celui-ci est transmis de nouveau au module de navigation 50 lors d'une étape 70.

Lors de cette étape 70, le module de navigation 50 transmet ce nouveau formulaire comportant les contenus sélectionnés au moteur d'exécution d'ambiance 54 qui lit les contenus multimédia sélectionnés sur au moins une partie des lecteurs audiovisuels, en fonction des paramètres de lecture définis dans l'entête du formulaire.

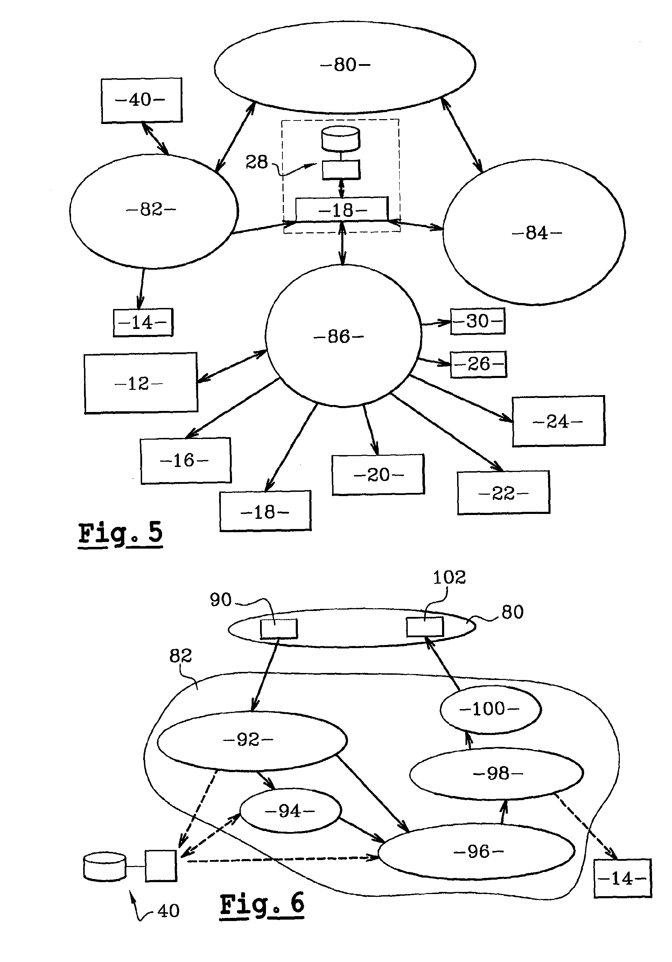

Le système de gestion de la base de données 28 décrit précédemment permet également la mise en oeuvre d'un procédé de gestion pour la génération et la lecture audiovisuelle d'un carnet de voyage constitué de contenus multimédia dont au moins une partie est stockée dans la base de données 28, la lecture étant exécutée sur au moins une partie des lecteurs audiovisuels 12, 14, 16, 18, 20, 22, 24, 26 et 30 reliés au réseau local 10. Ce procédé est plus précisément mis en oeuvre par des moyens logiciels, par exemple stockés sur le micro-ordinateur 18 ou sur la passerelle 36 et dont la structure est représentée sur la figure 5.

Ces moyens logiciels comprennent un module de navigation 80. Ce module, similaire au module de navigation 50, est adapté pour la présentation d'écrans de dialogue permettant la génération d'un carnet de voyage et la gestion d'un catalogue de carnets de voyages.

Les moyens logiciels comprennent un module 82 de préparation d'un voyage à partir d'un carnet de voyage correspondant. Ce module de préparation 82 interagit avec le module de navigation 80, mais également avec le serveur du fournisseur de services 40, pour l'extraction de données, avec la base de données 28, pour le stockage des données, et avec l'assistant numérique personnel 14, pour le téléchargement de données sur cet assistant.

Les moyens logiciels comprennent aussi un module 84 de création de carnets de voyages. Ce module de création interagit avec le module de navigation 80 et avec la base de données 28, pour l'extraction de contenus multimédia, et avec l'utilisateur, pour l'intégration directe d'autres contenus, tels que des photos prises au cours du voyage, des vidéos, des sons, etc.

Enfin, les moyens logiciels comprennent un module 86 de présentation d'un carnet de voyage qui exécute un fichier associé au carnet de voyage considéré. Ce module de présentation 86 est commandé à partir du micro-ordinateur 18 ou de la passerelle 36. Il est en outre adapté pour piloter les différents terminaux reliés au réseau local 10 en fonction des données enregistrées dans le fichier associé au carnet de voyage et en fonction des interactions des utilisateurs.

Les moyens logiciels décrits précédemment permettent la mise en oeuvre du procédé de préparation de voyages représenté sur la figure 6.

Lors d'une première étape 90, le module de navigation 80 propose à l'utilisateur la génération d'au moins un carnet de voyage comportant, d'une part des mots-clés pour la sélection de contenus multimédia sur le serveur du fournisseur de services 40, et d'autre part des paramètres de lecture des contenus multimédia sélectionnés sur au moins une partie des lecteurs audiovisuels reliés au réseau local 10.

Lors de cette première étape, l'utilisateur peut choisir la nature des contenus à utiliser, c'est-à-dire des contenus de type audio vidéo, image, texte ou odeur, et les terminaux à solliciter.

Un carnet de voyage est défini par un ensemble de descripteurs avec des valeurs prédéterminées. Les valeurs de ces descripteurs sont définies dans un formulaire correspondant qui est stocké dans la base de données 28.

Lors de la génération du carnet de voyage, l'utilisateur précise également des paramètres d'utilisation des terminaux qui sont destinés à être sollicités. Ces paramètres sont les mêmes que ceux utilisés pour la gestion d'ambiance multimédia.

A tout moment l'utilisateur peut créer un nouveau carnet de voyage, en détruire un ou bien en modifier un.

De même que le formulaire d'ambiance multimédia, le formulaire de carnet de voyage est réalisé sous la forme d'un fichier de données dont le contenu est constitué d'un entête et d'un corps. L'entête permet de mémoriser les paramètres généraux et additionnels du carnet de voyages. Le corps permet de mémoriser les listes de contenus pertinents, résultats d'une recherche sur le serveur du fournisseur de services 40.

Lors de l'étape 92 suivante, mise en oeuvre par le module de préparation du voyage 82, celui-ci extrait les descripteurs et leurs valeurs du formulaire fourni par le module de navigation 80.

Lors de cette étape également, le module de préparation 82 génère une requête comportant des mots-clés qui correspondent aux descripteurs extraits et associés à leurs valeurs.

Ensuite, lors d'une étape 96, le module de préparation 82 interagit avec le serveur du fournisseur de services 40 pour récupérer des contenus multimédia pertinents en réponse à la requête. Si certains contenus multimédia pertinents ne sont pas disponibles, on passe à une étape intermédiaire 94, lors de laquelle l'utilisateur peut passer commande de ce document qui lui sera alors transmis ultérieurement.

Lors de l'étape 98 suivante, l'utilisateur peut visualiser et éventuellement modifier les informations recueillies dans son carnet de voyage puis, ce carnet de voyage peut être transmis partiellement ou totalement à l'assistant numérique personnel 14 pour son utilisation effective par l'utilisateur pendant le voyage.

Ensuite, lors d'une étape 100, lorsque le carnet de voyage convient à l'utilisateur, celui-ci le nomme et l'enregistre dans la base de données 28.

Enfin de façon optionnelle, lors d'une dernière étape 102, le carnet de voyage peut être transmis au module de navigation 80, qui le transmet à son tour au module de présentation 86 pour la lecture des contenus multimédia sélectionnés sur au moins une partie des lecteurs audiovisuels, en fonction des paramètres de lecture définis dans l'entête du formulaire correspondant au carnet de voyage.

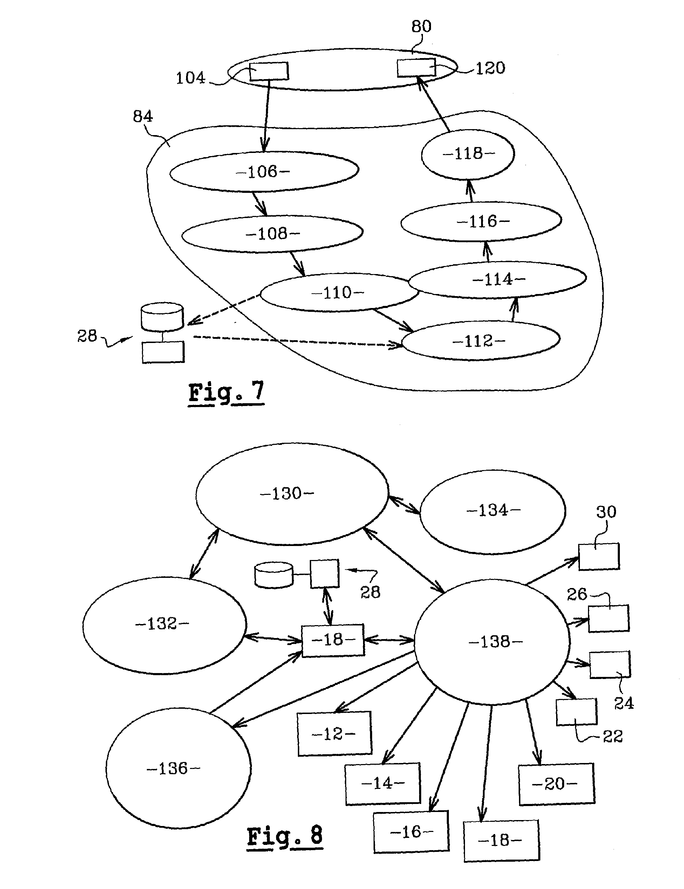

Les moyens logiciels décrits en référence à la figure 5 permettent aussi la mise en oeuvre du procédé de modification d'un carnet de voyage représenté sur la figure 7. Ce procédé est mis en oeuvre lorsque l'utilisateur souhaite intégrer de nouvelles données dans son carnet de voyage au retour de son voyage.

Lors d'une première étape 104, le module de navigation 80 propose à l'utilisateur l'option de modification d'un carnet de voyage. Lorsque l'utilisateur a sélectionné l'icone correspondant, on passe à une étape 106 lors de laquelle l'utilisateur recherche dans la base de données multimédia 28 le carnet de voyage considéré. Cette recherche peut être réalisée par saisie de mots-clés ou par choix dans une liste de carnets de voyages existant dans la base de données 28.

Lors de l'étape 108 suivante, le carnet de voyage sélectionné est extrait de la base de données multimédia 28. Puis, lors d'une étape 110, les mots-clés inclus dans ce document sont extraits pour générer une nouvelle requête vers la base de données multimédia 28. L'utilisateur peut éventuellement saisir des critères complémentaires pour tenir compte de la présence d'un certain public lors de la présentation, choisir certains terminaux de restitution, sélectionner certains type de contenus, etc.

La validation de ces éléments génère une recherche de contenus dans la base de données multimédia 28. Les contenus ainsi sélectionnés sont récupérés par le module de création 84 lors d'une étape 112.

Lors de l'étape 114 suivante, les contenus numériques sélectionnés sont insérés dans le carnet de voyage, en les ordonnant selon les noms de lieux auxquels ils se rapportent et en respectant l'ordre chronologique de réalisation de ces contenus.

Lors de l'étape 116 suivante, l'utilisateur peut visualiser et modifier le carnet de voyages obtenu lors de l'étape précédente.

Enfin, lors d'une étape 118, l'utilisateur nomme le document puis l'enregistre dans la base de données 28.

Eventuellement, lors d'une dernière étape 120, le module de navigation 80 commande, comme lors de l'étape 102, le module de présentation 86 pour la lecture des contenus multimédia du carnet de voyages.

De façon optionnelle, le module de présentation 86 peut également être associé à un module d'enregistrement et d'analyse d'ambiance lors de la lecture d'un carnet de voyages sur les terminaux multimédia.

Ce module permet l'enregistrement des commentaires et réactions des personnes présentes pendant la lecture des contenus multimédia et assure l'analyse de cette ambiance pour enrichir les descripteurs des contenus présentés.

Plus précisément, lors de la présentation d'un carnet de voyages, l'utilisateur a la possibilité d'enregistrer des commentaires en voix off, ainsi que l'ambiance et la réaction des personnes présentes. Ces sons peuvent être mémorisées dans le carnet de voyages et rejoués ultérieurement. Mais l'ambiance peut aussi être enregistrée et analysée. Son niveau sonore est par exemple évalué sur une échelle comprenant plusieurs niveaux, de "faible" à "fort". Cette évaluation permet par exemple de proposer un service regroupant uniquement les éléments du carnet de voyage ayant suscité un fort intérêt.

Le système de gestion décrit précédemment permet également la mise en oeuvre d'un procédé de gestion pour l'indexation des contenus multimédia stockés dans la base de données 28, chaque contenu multimédia étant associé à un ensemble de descripteurs à compléter. Ce procédé d'indexation comporte une étape de lecture des contenus multimédia sélectionnés sur au moins une partie des lecteurs audiovisuels 12, 14, 16, 18, 20, 22, 24, 26 et 30 reliés au réseau local 10, pendant l'exécution d'un programme d'indexation. Un tel programme d'indexation est de préférence présenté sous la forme d'un jeu utilisant les contenus multimédia à indexer.

Ce procédé est plus précisément mis en oeuvre par des moyens logiciels, par exemple stockés sur le micro-ordinateur 18 ou sur la passerelle 36 et dont la structure est représentée sur la figure 8.

Ces moyens logiciels comprennent un module de navigation 130. Ce module est adapté pour la présentation d'écrans de dialogue permettant la navigation dans le service, la gestion des fichiers de jeux et le lancement d'un ou plusieurs jeux.

Les moyens logiciels comprennent aussi un module 132 d'extraction de contenus multimédia dans la base de données 28, adapté pour l'obtention d'une liste de contenus multimédia pertinents par rapport à au moins un jeu sélectionné directement par l'utilisateur.

Inversement, les moyens logiciels comprennent un module 134 de sélection de jeux multimédia, adapté pour l'obtention d'au moins un jeu pertinent par rapport à un ensemble de contenus multimédia sélectionnés directement par l'utilisateur.

Les moyens logiciels comprennent aussi un module 136 d'enrichissement des descripteurs. Ce module permet, lors de l'exécution d'un jeu, de mettre à jour les descripteurs associés à un contenu multimédia utilisé.

Enfin, les moyens logiciels comprennent un module 138 de présentation de jeu, adapté pour piloter les différents terminaux nécessaires à l'exécution du jeu. Il gère donc les interactions de l'utilisateur durant la diffusion du jeu et commande l'ensemble des terminaux périphériques 12, 14, 16, 18, 20, 22, 24, 26 et 30.

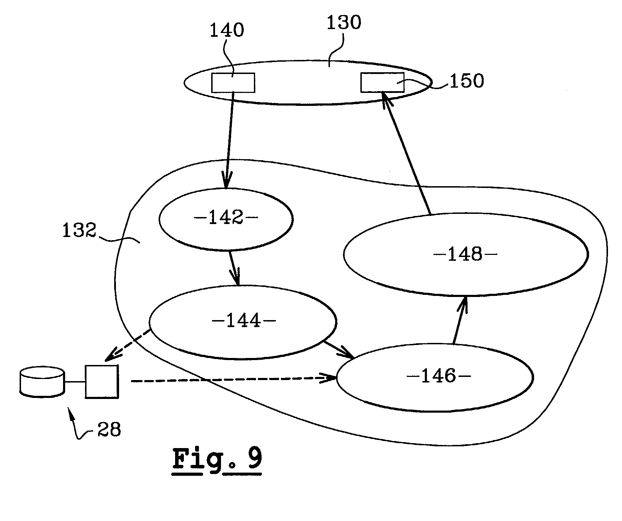

Les moyens logiciels décrits précédemment permettent la mise en oeuvre du procédé d'indexation représenté sur la figure 9.

Le procédé représenté sur cette figure permet d'extraire des contenus multimédia pertinents de la base de données en fonction d'un jeu sélectionné par l'utilisateur. Le procédé inverse, permettant d'extraire un ou plusieurs jeux pertinents en fonction de contenus multimédia sélectionnés par l'utilisateur pour leur indexation, découle directement de celui-ci et ne sera donc pas décrit.

Lors d'une première étape 140, le module de navigation 130 propose à l'utilisateur l'indexation de la base de données multimédia, soit en choisissant au préalable un jeu, soit en choisissant au préalable un ensemble de contenus à indexer. Lors de cette étape, dans cet exemple, l'utilisateur sélectionne un jeu, ce qui a pour effet d'activer le module d'extraction 132.

Lors de l'étape 142 suivante, le module d'extraction récupère les critères de recherche associés au jeu sélectionné. Ces critères de recherche comprennent les descripteurs que le jeu est capable de compléter.

Lors de l'étape 144 suivante, le module d'extraction 132 génère une requête à partir des critères de recherche et effectue une recherche en sollicitant la base de données multimédia 28.

Ensuite, lors d'une étape 146, le module d'extraction récupère les contenus multimédia les plus pertinents. Le degré de pertinence est par exemple évalué en fonction de la corrélation entre les descripteurs associés au jeu et les descripteurs à compléter pour chacun des contenus multimédia de la base de données 28.

Lors de l'étape 148 suivante, le module d'extraction génère un fichier associé au jeu comprenant l'ensemble des contenus numériques sélectionnés, à présenter à l'utilisateur pendant le déroulement du jeu.

Enfin, lors d'une étape 150, le module d'extraction 132 transmet ce fichier au module de navigation 130 qui le transmet à son tour au module de présentation 138. Le module de présentation du jeu 138 active au moins une partie des terminaux reliés au réseau local 10 pendant le déroulement du jeu.

Il apparaît clairement qu'un procédé et un système selon l'invention permettent la gestion d'une base de données destinée à évoluer, de façon simple, tout en proposant des applications capables de gérer automatiquement la lecture de contenus sélectionnés sur au moins une partie des lecteurs audiovisuels reliés à cette base de données.

## Revendications

1. Procédé de gestion d'au moins une base de données (28) stockant des contenus multimédia, cette base de données étant reliée par un réseau local (10) à au moins un lecteur audiovisuel (12, 14, 16, 18, 20, 22, 24, 26, 30) des contenus multimédia, **caractérisé en ce qu'**il comporte les étapes suivantes :
- génération (60 ; 90 ; 104 ; 140) d'au moins un formulaire comportant des mots-clés et des paramètres de lecture des contenus multimédia de la base de données (28) sur le lecteur audiovisuel (12, 14, 16, 18, 20, 22, 24, 26, 30) ;
- sélection (66 ; 96 ; 112 ; 146) de contenus multimédia de la base de données (28) en fonction des mots-clés du formulaire ;
- lecture (70 ; 102 ; 120 ; 150) des contenus multimédia sélectionnés sur le lecteur audiovisuel (12, 14, 16, 18, 20, 22, 24, 26, 30), en fonction des paramètres de lecture du formulaire.

2. Procédé de gestion d'au moins une base de données (28) selon la revendication 1, **caractérisé en ce qu'**il comporte les étapes suivantes :
- génération (64 ; 92 ; 110 ; 144) d'une requête comportant les mots-clés du formulaire ;
- fourniture (66 ; 96 ; 112 ; 146) d'une liste de contenus multimédia au moins en partie constituée de contenus de la base de données en réponse à la requête ;
- lecture (70 ; 102 ; 120 ; 150) des contenus multimédia retournés en réponse à la requête, sur le lecteur audiovisuel (12, 14, 16, 18, 20, 22, 24, 26, 30), en fonction des paramètres de lecture du formulaire.

3. Procédé de gestion d'au moins une base de données (28) selon la revendication 2, pour la génération d'une ambiance multimédia par la lecture d'une partie des contenus multimédia de la base de données sur le lecteur audiovisuel (12, 14, 16, 18, 20, 22, 24, 26, 30), **caractérisé en ce qu'**il comporte une étape (62) d'extraction du formulaire parmi un ensemble de formulaires prédéfinis, chaque formulaire comprenant des mots-clés et des paramètres de lecture des contenus multimédia de la base de données sur le lecteur audiovisuel.

4. Procédé de gestion d'au moins une base de données (28) selon la revendication 2, pour la génération et la lecture audiovisuelle d'un carnet de voyage constitué de contenus multimédia dont au moins une partie est stockée dans la base de données, **caractérisé en ce qu'**il comporte les étapes suivantes :
- extraction (108) du formulaire comprenant des mots-clés et des paramètres de lecture des contenus multimédia de la base de données sur le lecteur audiovisuel (12, 14, 16, 18, 20, 22, 24, 26, 30) ;
- génération (110) d'une requête comportant les mots-clés du formulaire ;
- fourniture (112) d'une liste de contenus multimédia au moins en partie constitués de contenus de la base de données en réponse à la requête ;

5. Procédé de gestion d'au moins une base de données (28) selon la revendication 4, **caractérisé en ce qu'**il comporte en outre une étape (114) d'insertion des contenus multimédia fournis dans le carnet de voyage, en les ordonnant selon les noms de lieux auxquels ils se rapportent et en respectant l'ordre chronologique de réalisation de ces contenus.

6. Procédé de gestion d'au moins une base de données (28) selon la revendication 1, pour l'indexation des contenus multimédia stockés dans la base de données, chaque contenu multimédia étant associé à un ensemble de descripteurs à compléter, **caractérisé en ce qu'**il comporte les étapes suivantes :
- sélection d'au moins un programme d'indexation dans une liste de programmes d'indexation et de contenus multimédia dans la base de données, par l'émission (144) d'une requête générée à partir du formulaire, chaque programme d'indexation de la liste exploitant au moins une partie des contenus de la base de données en vue de leur indexation et étant associé à un ensemble de descripteurs qu'il est capable de compléter lorsqu'il est activé ;
- (150) activation du programme d'indexation sélectionné ;
- (150) lecture des contenus multimédia sélectionnés sur le lecteur audiovisuel pendant l'exécution du programme d'indexation, en fonction des paramètres de lecture du formulaire.

7. Procédé de gestion d'au moins une base de données (28) selon la revendication 6, **caractérisé en ce que**, lors de l'étape de sélection :
- on définit directement (140) chaque programme d'indexation sélectionné par les mots-clés du formulaire ;
- on génère la requête (144) en introduisant dans celle-ci les descripteurs associés à chaque programme d'indexation sélectionné ;
- on sélectionne (146), en réponse à la requête, les contenus multimédia dont les descripteurs à compléter correspondent le mieux aux descripteurs associés à chaque programme d'indexation sélectionné.

8. Procédé de gestion d'au moins une base de données selon la revendication 6, **caractérisé en ce que**, lors de l'étape de sélection :
- on définit directement (140) les contenus multimédia sélectionnés par les mots-clés du formulaire ;
- on génère la requête (144) en introduisant dans celle-ci les descripteurs à compléter associés aux contenus sélectionnés ;
- on sélectionne (146), en réponse à la requête, au moins un programme d'indexation associé à des descripteurs correspondant le mieux aux descripteurs à compléter des contenus multimédia sélectionnés.

9. Procédé de gestion d'au moins une base de données (28) selon l'une quelconque des revendications 6 à 8, **caractérisé en ce que** le programme d'indexation est un jeu multimédia.

10. Procédé de gestion d'au moins une base de données (28) selon l'une quelconque des revendications 1 à 9, **caractérisé en ce que** la base de données est reliée à plusieurs lecteurs audiovisuels (12, 14, 16, 18, 20, 22, 24, 26, 30), et **en ce que** les paramètres de lecture du formulaire définissent pour chacun de ces lecteurs audiovisuels, le type de contenus qu'il est apte à lire.

11. Système de gestion d'au moins une base de données (28) stockant des contenus multimédia, le système comportant un réseau local (10) auquel sont reliés la base de données et au moins un lecteur audiovisuel (12, 14, 16, 18, 20, 22, 24, 26, 30) des contenus multimédia, **caractérisé en ce qu'**il comporte en outre :
- des moyens (50 ; 80 ; 130) de génération d'au moins un formulaire comportant des mots-clés et des paramètres de lecture des contenus multimédia de la base de données sur le lecteur audiovisuel ;
- des moyens (52 ; 82 ; 84 ; 132) de sélection de contenus multimédia de la base de données en fonction des mots-clés du formulaire ;
- des moyens (54 ; 86 ; 138) d'affectation des contenus multimédia sélectionnés sur le lecteur audiovisuel, en fonction des paramètres de lecture du formulaire.

12. Dispositif de gestion d'au moins une base de données (28) stockant des contenus multimédia, cette base de données étant reliée par un réseau local (10) à au moins un lecteur audiovisuel (12, 14, 16, 18, 20, 22, 24, 26, 30), **caractérisé en ce qu'**il comporte :
- des moyens (50 ; 80 ; 130) de génération d'au moins un formulaire comportant des mots-clés et des paramètres de lecture des contenus multimédia de la base de données sur le lecteur audiovisuel ;
- des moyens (52 ; 82 ; 84 ; 132) de sélection de contenus multimédia de la base de données en fonction des mots-clés du formulaire ;
- des moyens (54 ; 86 ; 138) d'affectation des contenus multimédia sélectionnés sur le lecteur audiovisuel, en fonction des paramètres de lecture du formulaire.

13. Dispositif de gestion d'au moins une base de données selon la revendication 12, **caractérisé en ce qu'**il comporte un micro-ordinateur (18).
